# FASCICULE DE BREVET EUROPEEN

(11) **EP 4 046 171 B1**
(45) Date de publication et mention de la délivrance du brevet: **22.11.2023**
(21) Numéro de dépôt: 20789152.4
(22) Date de dépôt: 13.10.2020
(51) Int. Cl.: G21F 5/12, G21F 7/02, G21F 7/03

(54) **ENCEINTE DE CONFINEMENT AVEC HUBLOT**
SICHERHEITSBEHÄLTER MIT FENSTER
CONTAINMENT VESSEL WITH WINDOW

(30) Priorité: 14.10.2019 FR 1911410; 14.10.2019 FR 1911411
(43) Date de publication de la demande: 24.08.2022
(73) Titulaire: Corning Incorporated, Corning, New York 14831 (US)
(72) Inventeur: RAIN, Joël, 77640 COURCELLES SOUS JOUARRE (FR); SAVARY, Jean-Philippe, 75019 PARIS (FR); NUGUE, Jean-Clément, 60300 SENLIS (FR)
(74) Mandataire: Elkington and Fife LLP
(86) Numéro de dépôt international: PCT/EP2020/078749
(87) Numéro de publication internationale: WO 2021/074130

(56) Documents cités:
- FR-A1- 2 840 723
- FR-A1- 2 858 827

## Description

L'invention concerne une enceinte de confinement. Une telle enceinte de confinement est utilisée pour permettre le stockage ou la manipulation de produits spécifiques. Ces produits spécifiques sont notamment des produits émettant des radiations, et notamment des radiations du type gamma.

Ces enceintes de confinement sont constituées d'une paroi formant un espace clos, cette paroi étant réalisée en béton. Afin de pouvoir avoir une visibilité sur l'intérieur de l'enceinte, un système de visualisation est agencé dans ladite paroi. Un tel système comprend un châssis noyé dans la paroi en béton. Ce châssis présente une ouverture dans laquelle un hublot est placé. Ce hublot comprend un cadre dans lequel une pluralité de feuilles de verre formant un bloc résistant aux radiations sont agencées. Préférentiellement, le châssis est équipé en outre d'une vitre de protection agencée entre le hublot et l'enceinte. Cette vitre de protection offre une protection supplémentaire.

La mise en place de ce hublot entraine la nécessité d'avoir une bonne étanchéité à l'air. Pour cela, des joints simples du type torique sont utilisés et agencés à l'interface de la vitre de protection avec le châssis. Ces joints permettent d'empêcher l'air potentiellement contaminé de l'enceinte d'entrée en contact avec le hublot et l'extérieur de l'enceinte.

Or, il a été constaté que les joints simples ont tendance à être moins performants sous l'effet des radiations et du temps ce qui peut entraîner l'apparition de fuites.

L'apparition de ces fuites entraine alors la nécessité d'effectuer une opération de maintenance consistant à démonter le hublot pour remplacer les joints. Cette opération de maintenance est lourde et coûteuse.

### RESUME DE L'INVENTION

Le but de l'invention est alors de résoudre le problème de l'art antérieur en proposant une enceinte de confinement munie d'une étanchéité fiable et durable.

L'objet de l'invention concerne une enceinte de confinement comprenant une paroi en un matériau du type béton délimitant un espace et au moins un module de visualisation, ce module de visualisation comprenant au moins un hublot agencé dans une ouverture de la paroi, ledit hublot comportant un cadre dans lequel au moins un bloc optique conférant une protection contre les rayonnements à haute énergie et/ou neutronique est placé, ledit cadre s'ajustant dans l'ouverture, le module de visualisation comportant en outre un élément de protection comprenant un châssis portant une vitre et agencé pour fermer l'ouverture au niveau de la face à l'intérieur de l'enceinte, ledit module de visualisation comprenant ainsi au moins une interface (I) entre deux surfaces,
caractérisée en ce qu'elle comprend en outre au moins un système d'étanchéité agencé au niveau d'au moins une interface, ledit système d'étanchéité comprenant au moins une chambre hermétique périphérique à l'interface, ladite chambre étant remplie d'un gaz neutre, et en ce que ledit système d'étanchéité comprend un dispositif de mesure de la pression dans la chambre et un dispositif d'injection de gaz permettant d'injecter une quantité de gaz neutre dans la chambre en fonction d'une valeur fournie par le dispositif de mesure de la pression Selon un exemple, la chambre hermétique est formée par une pièce de jointure coopérant avec les deux surfaces formant interface.

Selon un exemple, ladite pièce de jointure comprend un joint unique ayant une forme telle qu'il présente au moins deux point d'appui sur une surface de l'interface et au moins un point d'appui sur l'autre surface de l'interface.

Selon un exemple, ladite pièce de jointure comprend deux joints ayant chacun une forme de boucle agencés concentriquement entre les deux surfaces formant l'interface.

Selon un exemple, le bâti comprend au moins un canal permettant l'installation de façon étanche du dispositif de mesure de la pression dans la chambre et du dispositif d'injection de gaz, ledit canal débouchant dans la chambre hermétique.

Selon un exemple, ladite au moins une interface du module de visualisation comprend deux chambres hermétiques chacune associée à un dispositif de mesure de la pression dans la chambre et un dispositif d'injection de gaz permettant d'injecter une quantité de gaz neutre dans la chambre.

Selon un exemple, chaque chambre appartient à un système d'étanchéité distinct.

Selon un exemple, les deux chambres sont formées par une seule pièce de jointure.

Selon un exemple, ladite pièce de jointure comprend un joint unique ayant une forme telle qu'il présente au moins deux point d'appui sur une surface de l'interface et au moins trois points d'appui sur l'autre surface de l'interface afin de former deux chambres distinctes.

Selon un exemple, le module de visualisation comprend un bâti agencé dans la paroi, ce bâti présentant l'ouverture.

Selon un exemple, au moins système d'étanchéité est agencé à l'interface entre ledit hublot et/ou ledit élément de protection et le bâti.

Selon un exemple, chaque interface présente un système d'étanchéité.

L'invention concerne en outre un procédé de gestion de l'étanchéité d'une enceinte selon l'une des revendications précédentes, caractérisé en ce qu'il comprend les étapes suivantes :
- Mesurer la pression dans la chambre hermétique par le dispositif de mesure de la pression ;
- Comparer la pression mesurée à une valeur de pression de référence
- Activer le dispositif d'injection de gaz permettant d'injecter une quantité de gaz neutre dans la chambre si la valeur mesurée est inférieur à la valeur de référence, ledit dispositif d'injection de gaz injectant la quantité de gaz permettant à la pression dans la chambre hermétique d'atteindre valeur de pression de référence.

### DESCRIPTION DES FIGURES

D'autres particularités et avantages ressortiront clairement de la description qui en est faite ci-après, à titre indicatif et nullement limitatif, en référence aux dessins annexés, dans lesquels:
- les fig. 1 et 2 sont des représentations schématiques d'une enceinte de confinement;
- les fig. 3 et 4 sont des représentations schématiques du système d'étanchéité selon l'invention;
- les fig. 5 et 6 sont des représentations schématiques de la pièce de jointure formant la chambre hermétique;
- les fig. 7 et 8 sont des représentations schématiques de la pièce de jointure formant deux chambres hermétiques;
- la fig. 9 est une représentation schématique d'un module de visualisation portant plusieurs systèmes d'étanchéité.

### DESCRIPTION DETAILLEE

La présente invention concerne une enceinte de confinement, plus particulièrement une enceinte permettant le confinement de matériaux générant des rayonnements à haute énergie tels que les rayonnements X, y, et/ou neutronique.

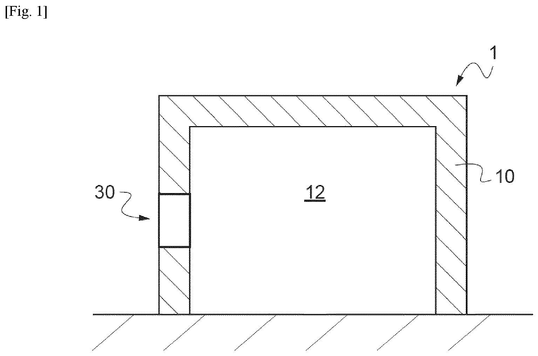

Une telle enceinte 1 comprend une paroi 10 délimitant un espace 12 comme visible à la figure 1. Cette paroi 10 est réalisée dans un matériau du type béton ou béton armé mais peut être réalisée dans n'importe quel matériau permettant de réaliser une enceinte de confinement comme acier ou plomb.

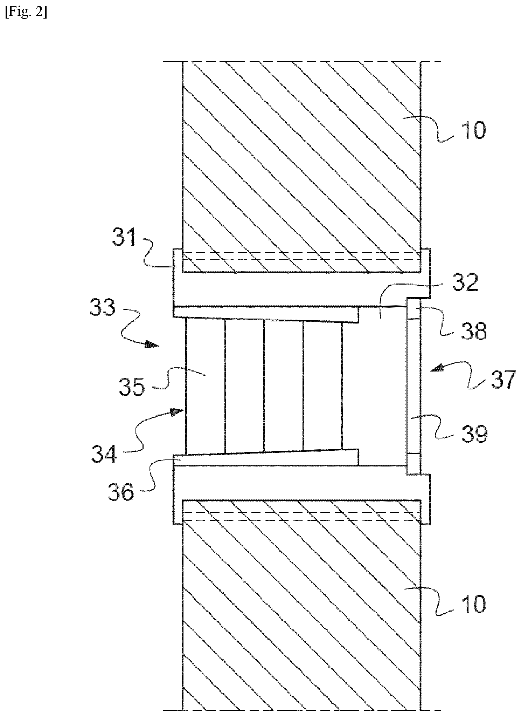

Cette enceinte 1 comprend un module de visualisation 30 permettant à un opérateur de pouvoir observer ce qu'il se passe dans ladite enceinte 1, comme visible à la figure 2. Un tel module de visualisation 30 comprend au moins un hublot 33. Ce hublot 33 comprend un bloc optique 34 comprend au moins une feuille de verre 35. De préférence, ledit bloc optique 34 comprend une pluralité de feuilles de verre 35 assemblées les uns aux autres. Ce bloc optique 34 est agencé dans un cadre 36. Optionnellement, ces feuilles de verre peuvent être collées ou un matériau de remplissage peut être utilisé combler un espace ou jeu prévu entre le bloc optique 34 et le cadre 36.

Le hublot 33 est alors placé dans une ouverture 32 de la paroi 10. Le cadre 36 et l'ouverture 32 étant telle que le cadre 36 portant le bloc optique 34 s'encastre dans l'ouverture 32. Des moyens de fixations, comme des vis, sont utilisés pour assurer une fixation durable.

Dans le cas où cette paroi 10 est réalisée dans un matériau du type béton, un bâti 31 est prévu. Ce bâti 31 est ainsi intégré, noyé dans la paroi 10. Le bâti 31 comprend alors ladite ouverture traversante 32.

Préférentiellement, le hublot 33 est inséré dans l'ouverture 32 coté opérateur c'est-à-dire par la face du bâti 31 extérieure à l'enceinte 1.

Optionnellement, le module de visualisation 30 comprend en outre un élément de protection 37. Cet élément de protection 37 est utilisé pour protéger le hublot 33 d'agression venant de l'intérieur de l'enceinte 1. Pour cela, cet élément de protection 37 est agencée au niveau de l'ouverture 32 sur la face intérieure du bâti 31 c'est-à-dire la face du bâti qui voit l'intérieur de l'enceinte.

Cet élément de protection 37 comprend un châssis 38 portant une vitre 39. Le châssis 38 est utilisé pour la fixation dudit élément de protection 37 au bâti.

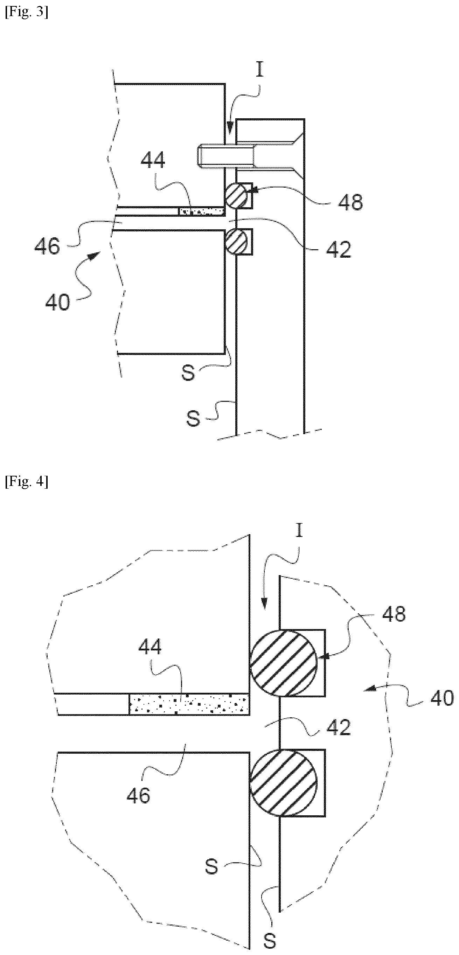

Astucieusement selon l'invention, l'enceinte 1 comprend en outre au moins un système d'étanchéité 40. Ce système d'étanchéité 40 est agencé au niveau d'une des interfaces I du module de visualisation 30 comme visibles aux figures 3 et 4. Une telle interface I est définie comme étant la surface commune de jonction entre deux surfaces S de pièces distinctes. Par exemple, une interface I est présente entre le cadre 36 et le bâti 31 ou entre le châssis 38 et le bâti 31.

Le système d'étanchéité 40 selon l'invention comprend une chambre hermétique 42 agencée au niveau de l'interface du module de visualisation 30 à étanchéifier. Cette chambre hermétique 42 est associée à un dispositif de mesure de la pression 44 et à un dispositif d'injection de gaz 46. En effet, la chambre hermétique 42 est remplie d'un gaz du type neutre comme, par exemple, de l'azote. Ce gaz neutre est mis à une pression définie / de référence p. Le dispositif de mesure de la pression 44 est agencé pour mesurer la pression à l'intérieur de la chambre hermétique 42. Le dispositif de mesure 44 génère ainsi un signal représentatif de la pression mesurée. Le dispositif de mesure utilisé pour la mesure de la pression a une sensibilité de 50 Pa, de préférence 20Pa, encore plus de préférence 10 Pa et idéalement 5 Pa. Ce signal est reçu par une unité de calcul (non représentée) qui compare la valeur de pression mesurée à la valeur une pression définie p de la chambre. Si la valeur mesurée est différente la valeur de pression définie p, c'est qu'une fuite est présente. Ainsi, une commande est envoyée par ladite unité de calcul. Cette commande est envoyée au dispositif d'injection de gaz 46. Ce dispositif d'injection de gaz 46 (non représenté en détails) comprend, par exemple et de façon non limitative, un élément de stockage, comme une bonbonne ou bouteille de gaz, dans lequel le gaz est stocké, sous pression ou pas. Cet élément de stockage est associé à une vanne commandable par l'unité de calcul et un débitmètre. L'unité de calcul est ainsi apte à calculer, en fonction de la différence de pression entre la pression mesurée et la pression définie p, la quantité de gaz à injecter dans la chambre hermétique 42. La vanne commandable et le débitmètre sont utilisés de concert pour injecter la bonne quantité de gaz dans un tuyau de sortie débouchant dans la chambre hermétique. Cette injection de gaz dans la chambre hermétique permet avantageusement de pérenniser l'étanchéité du module de visualisation 30.

La variation de la pression dépend du différentiel de pression entre la pression dans la chambre hermétique 42 et la ou les pressions de part et d'autre du système d'étanchéité 40. Si la pression dans la chambre hermétique est plus faible que celle(s) à l'extérieur alors une fuite se caractérise par une augmentation de la pression dans ladite chambre hermétique. Au contraire, si la pression dans la chambre hermétique est plus forte que celle(s) à l'extérieur, alors une fuite se caractérise par une baisse de la pression dans la chambre.

En cas de baisse de pression, on réajuste la pression dans la chambre alors qu'en cas de hausse, soit une alarme est activée soit le dispositif d'injection de gaz 46 est apte à évacuer un trop plein de pression.

Idéalement, la pression dans la chambre hermétique 42 sera plus importante que celle dans l'enceinte 1 afin qu'une fuite au niveau du système d'étanchéité entraine le transfert du gaz de la chambre 42 vers l'enceinte.

Plus précisément, la chambre hermétique 42 est formée par une pièce de jointure 48. Cette pièce de jointure 48 coopère avec les deux surfaces S formant interface I de sorte qu'une chambre soit créée. Cette pièce de jointure 48 est, préférentiellement, conçue de telle sorte qu'elle sur le pourtour de l'interface I pour créer une chambre 42 périphérique. Par exemple, si les deux surfaces générant l'interface sont circulaires alors la pièce de jointure sera circulaire.

Cette pièce de jointure 48 se présente de différentes façons.

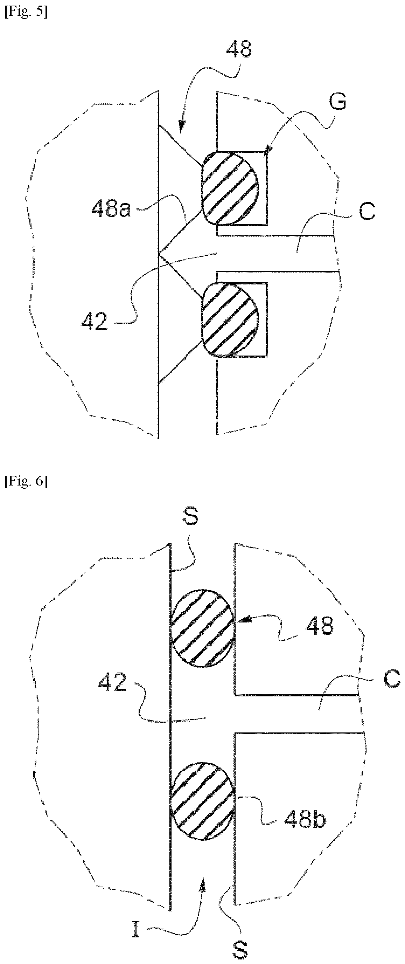

Une première façon visible à la figure 5 consiste à avoir une pièce de jointure 48 qui comprend un joint unique 48a. Ce joint unique 48a présente une forme telle qu'il présente au moins deux point d'appui sur une surface S formant l'interface et au moins un point d'appui sur l'autre surface S formant l'interface. Par exemple, un joint ayant une forme en V ou W est utilisable. Ce joint unique peut présenter, au niveau des points d'appui, une épaisseur plus importante afin d'avoir une plus grande surface de contact et donc de meilleures performances.

Selon une seconde façon visible à la figure 6, la pièce de jointure 48 se présente sous la forme de deux joints 48b. Chaque joint 48b se présente sous la forme d'une boucle. Les deux joints 48b sont alors agencés pour être disposés concentriquement. De préférence, les deux joints 48b sont parallèles l'un à l'autre. L'espèce entre les deux joints 48b concentriques défini ainsi la chambre 42 dans laquelle le gaz neutre est placé.

Optionnellement, des gorges ou rainures G sont agencés sur les surfaces de l'interface pour que la pièce de jointure 48 puisse s'y placer. Cela permet d'assurer un bon positionnement de ladite pièce de jointure 48 et donc d'assurer un fonctionnement optimal.

Afin de pouvoir opérer les fonctions de mesure et de remplissage de la chambre avec du gaz, la chambre hermétique 42 est munie d'au moins un canal C par lequel le dispositif de mesure de la pression 44 et le dispositif d'injection de gaz 46 peuvent agir. Ce canal C consiste en une ouverture dans laquelle le tuyau de sortie du dispositif d'injection de gaz 46 et le dispositif de mesure de la pression 44 sont agencés. Le dispositif de mesure de la pression 44 ( non représenté en détails) se présente, par exemple et de façon non limitative, sous la forme d'un élément unique comportant un capteur et un module de génération d'un signal dans le même boitier ou dans des boitiers distincts. Le dispositif de mesure de la pression 44 et le tuyau de sortie du dispositif d'injection de gaz 46 sont montés de façon étanche dans ladite ouverture. Pour cela, des joints, comme par exemple du type torique, sont utilisés.

Il est également possible que deux canaux C soient agencés : un premier canal C pour le dispositif de mesure de la pression 44 et un canal C pour le dispositif d'injection de gaz 46.

Une variante consiste à voir deux dispositifs de mesure de la pression 44 pour mesurer la pression de la même chambre hermétique 42. Cette variante permet d'avoir un effet de redondance qui permet de prévenir la défaillance d'un capteur pour empêcher de remettre du gaz dans ladite chambre hermétique 42 sans baisse de pression.

Le ou les canaux C sont préférentiellement agencés dans le bâti 31 afin de pouvoir d'avoir accès au dispositif de mesure de la pression 44 et au dispositif d'injection de gaz 46 depuis l'extérieur. Néanmoins, il est possible que le ou les canaux C puissent comprendre des raccords rigides ou souples afin de pouvoir être agencés à souhait.

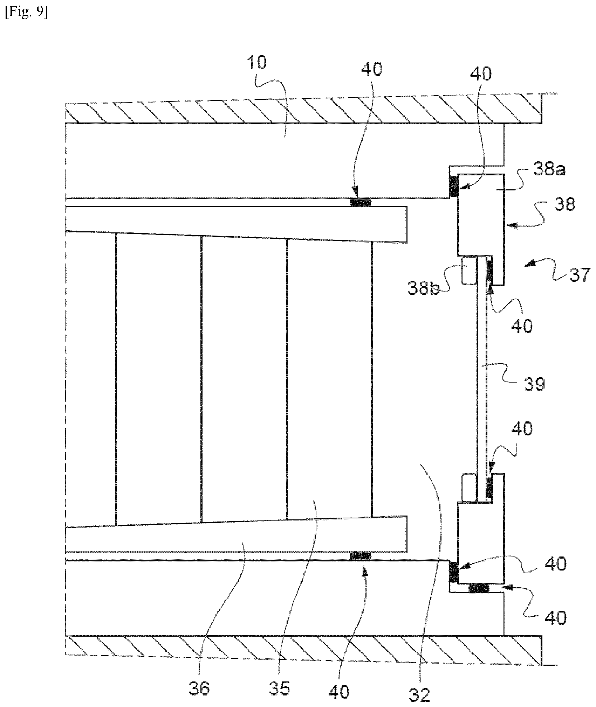

En effet, le système d'étanchéité 40 selon l'invention peut être installé au niveau d'au moins une interface du module de visualisation 30 mais peut être installé en différents endroits, voir à chaque interface. Un tel module de visualisation 30 comprend effectivement de nombreuses pièces se fixant les unes aux autres, chaque interface I entre deux pièces étant susceptible d'être étanchéifiée. Par exemple sur la figure 9, le cadre 38 de l'élément de protection 37 portant la vitre 39 comprend un support 38a et un contre support 38b. Le support comprend une surface d'appui sur laquelle la vitre prend appui, le contre support étant agencé pour être fixé sur le support en permettant à la vitre d'être intercalée entre la surface d'appui du support et le contre-support. Il est donc envisageable de mettre un système d'étanchéité 40 selon l'invention à l'interface entre la vitre et la surface d'appui et/ou à l'interface entre la vitre et le contre support et/ou à l'interface entre le support et le contre-support

Une autre variante consiste à prévoir l'installation de deux systèmes d'étanchéité 40 selon l'invention pour chaque interface, chaque système d'étanchéité 40 étant indépendant. Cette variante permet avantageusement d'avoir une étanchéité supérieure. Les deux systèmes d'étanchéité 40 utilisés pour la même interface I sont agencés pour que les deux chambres 42 soient à une pression égale ou différente.

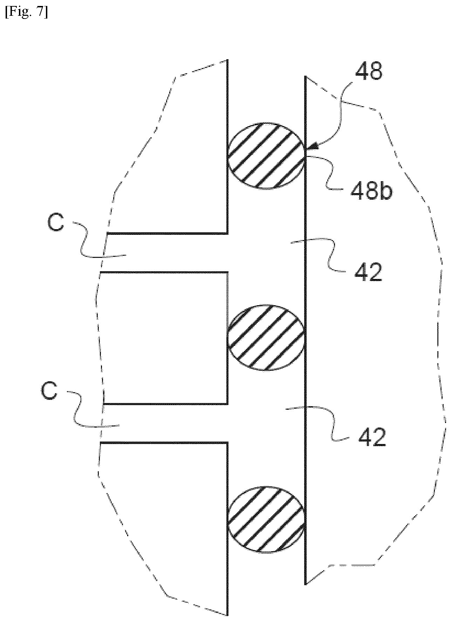

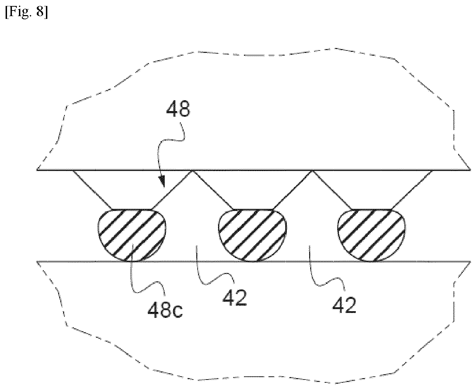

Une alternative à cette variante consiste à avoir une pièce de jointure 48 conçue pour définir deux chambres hermétiques 42 distinctes comme visible à la figure 7. Chaque chambre hermétique coopère avec au moins un dispositif de mesure de la pression 44 et au moins un dispositif d'injection de gaz 46. Les deux chambres hermétiques peuvent avoir la même pression mais il est envisageable que les deux chambres hermétiques formées par la même pièce de jointure 47 soient à des pressions différentes. Dans ce cas-là, ces deux chambres hermétiques sont créées par un joint unique 48c, visible à la figure 7, dont la forme permet d'apparition de deux chambres hermétiques 42 distinctes. Mais ces deux chambres hermétiques 42 sont susceptibles d'être créées par trois joints en forme de boucle agencés concentriquement comme visible à la figure 8.

Bien entendu, la présente invention ne se limite pas à l'exemple illustré mais est susceptible de diverses variantes et modifications selon les revendications.

Ainsi, le système d'étanchéité d'une interface entre deux surfaces comprend au moins une chambre hermétique périphérique à l'interface, ladite chambre étant remplie d'un gaz neutre, et en ce que ledit système d'étanchéité comprend un dispositif de mesure de la pression dans la chambre et un dispositif d'injection de gaz permettant d'injecter une quantité de gaz neutre dans la chambre en fonction d'une valeur fournie par le dispositif de mesure de la pression. Ce système d'étanchéité est utilisé dans le cadre d'applications en chimie ou biologie ou pour des radiations à haute énergie et/ou neutroniques.

Selon un exemple, la chambre hermétique est formée par une pièce de jointure coopérant avec les deux surfaces formant interface.

Selon un exemple, ladite pièce de jointure comprend un joint unique ayant une forme telle qu'il présente au moins deux point d'appui sur une surface de l'interface et au moins un point d'appui sur l'autre surface de l'interface.

Selon un exemple, ladite pièce de jointure comprend deux joints ayant chacun une forme de boucle agencés concentriquement entre les deux surfaces formant l'interface.

Selon un exemple, deux chambres hermétiques sont agencées, chacune associée à un dispositif de mesure de la pression dans la chambre et un dispositif d'injection de gaz permettant d'injecter une quantité de gaz neutre dans la chambre.

Selon un exemple, les deux chambres sont formées par une seule pièce de jointure.

Selon un exemple, ladite pièce de jointure comprend un joint unique ayant une forme telle qu'il présente au moins deux point d'appui sur une surface de l'interface et au moins trois points d'appui sur l'autre surface de l'interface afin de former deux chambres distinctes.

L'invention concerne aussi une paroi de séparation entre un milieu extérieur et un milieu intérieur comprenant une ouverture dans laquelle un insert est agencé, une interface entre la surface de la paroi et la surface de l'insert, caractérisé en ce qu'au moins un système d'étanchéité selon l'invention est agencé au niveau de cette interface.

Selon un exemple, la paroi et/ou l'insert comprennent au moins un canal permettant l'installation de façon étanche du dispositif de mesure de la pression dans la chambre et du dispositif d'injection de gaz, ledit canal débouchant dans la chambre hermétique.

L'invention concerne en outre un procédé de gestion de l'étanchéité d'une paroi entre un milieu intérieur et un milieu extérieur selon l'une des revendications précédentes, caractérisé en ce qu'il comprend les étapes suivantes :
- Mesurer la pression dans la chambre hermétique par le dispositif de mesure de la pression ;
- Comparer la pression mesurée à une valeur de pression de référence;
- Activer le dispositif d'injection de gaz permettant d'injecter une quantité de gaz neutre dans la chambre si la valeur mesurée est inférieure à la valeur de référence, ledit dispositif d'injection de gaz injectant la quantité de gaz permettant à la pression dans la chambre hermétique d'atteindre valeur de pression de référence.

## Revendications

1. Enceinte de confinement (1) comprenant une paroi (10) en un matériau du type béton délimitant un espace (12) et au moins un module de visualisation (30), ce module de visualisation comprenant au moins un hublot (33) agencé dans une ouverture (32) de la paroi (10), ledit hublot comportant un cadre (36) dans lequel au moins un bloc optique (34) conférant une protection contre les rayonnements à haute énergie et/ou neutronique est placé, ledit cadre s'ajustant dans l'ouverture (32), le module de visualisation comportant en outre un élément de protection (37) comprenant un châssis (38) portant une vitre (39) et agencé pour fermer l'ouverture au niveau de la face à l'intérieur de l'enceinte, ledit module de visualisation comprenant ainsi au moins une interface (I) entre deux surfaces (S),
**caractérisée en ce qu'**elle comprend en outre au moins un système d'étanchéité (40) agencé au niveau d'au moins une interface (I), ledit système d'étanchéité comprenant au moins une chambre hermétique (42) périphérique à l'interface, ladite chambre étant remplie d'un gaz neutre, et **en ce que** ledit système d'étanchéité comprend un dispositif de mesure de la pression (44) dans la chambre et un dispositif d'injection de gaz (46) permettant d'injecter une quantité de gaz neutre dans la chambre en fonction d'une valeur fournie par le dispositif de mesure de la pression .

2. Enceinte de confinement selon la revendication précédente, dans laquelle la chambre hermétique (42) est formée par une pièce de jointure (48) coopérant avec les deux surfaces (S) formant interface (I).

3. Enceinte de confinement selon la revendication précédente, dans laquelle ladite pièce de jointure (48) comprend un joint unique (48a) ayant une forme telle qu'il présente au moins deux point d'appui sur une surface de l'interface et au moins un point d'appui sur l'autre surface de l'interface.

4. Enceinte de confinement selon la revendication 2, dans laquelle ladite pièce de jointure (48) comprend deux joints (48b) ayant chacun une forme de boucle agencés concentriquement entre les deux surfaces formant l'interface.

5. Enceinte de confinement selon l'une des revendications 2 à 4, dans laquelle l'enceinte comprend au moins un canal (C) permettant l'installation de façon étanche du dispositif de mesure de la pression (44) dans la chambre et du dispositif d'injection de gaz (46), ledit canal débouchant dans la chambre hermétique.

6. Enceinte de confinement selon l'une des revendications précédentes, dans laquelle ladite au moins une interface du module de visualisation comprend deux chambres hermétiques chacune associée à un dispositif de mesure de la pression dans la chambre et un dispositif d'injection de gaz permettant d'injecter une quantité de gaz neutre dans la chambre.

7. Enceinte de confinement selon la revendication précédente, dans laquelle chaque chambre appartient à un système d'étanchéité distinct.

8. Enceinte de confinement selon la revendication 6, dans laquelle les deux chambres sont formées par une seule pièce de jointure.

9. Enceinte de confinement selon la revendication 6, dans laquelle ladite pièce de jointure comprend un joint unique (48c) ayant une forme telle qu'il présente au moins deux point d'appui sur une surface de l'interface et au moins trois points d'appui sur l'autre surface de l'interface afin de former deux chambres distinctes.

10. Enceinte de confinement selon la revendication précédente, dans laquelle le module de visualisation comprend un bâti (31) agencé dans la paroi (10), ce bâti présentant l'ouverture (32).

11. Enceinte de confinement selon la revendication précédente, dans laquelle au moins système d'étanchéité est agencé à l'interface entre ledit hublot et/ou ledit élément de protection et le bâti.

12. Enceinte de confinement selon la revendication précédente, dans laquelle chaque interface présente un système d'étanchéité.

13. Procédé de gestion de l'étanchéité d'une enceinte selon l'une des revendications précédentes, **caractérisé en ce qu'**il comprend les étapes suivantes :
- Mesurer la pression dans la chambre hermétique (42) par le dispositif de mesure de la pression (44);
- Comparer la pression mesurée à une valeur de pression de référence (p) ;
- Activer le dispositif d'injection de gaz (46) permettant d'injecter une quantité de gaz neutre dans la chambre si la valeur mesurée est inférieur à la valeur de référence, ledit dispositif d'injection de gaz injectant la quantité de gaz permettant à la pression dans la chambre hermétique (42) d'atteindre valeur de pression de référence.

## Patentansprüche

1. Sicherheitshülle (1), umfassend eine Wand (10) aus einem betonartigen Material, das einen Raum (12) begrenzt, und mindestens ein Visualisierungsmodul (30), wobei dieses Visualisierungsmodul mindestens ein Schutzfenster (33) umfasst, das in einer Öffnung (32) der Wand (10) angeordnet ist, wobei das Schutzfenster einen Rahmen (36) aufweist, in dem mindestens ein optischer Block (34) angeordnet ist, der einen Schutz gegen Hochenergie- und/oder Neutronenstrahlungen verleiht, wobei der Rahmen in die Öffnung (32) passt, wobei das Visualisierungsmodul außerdem ein Schutzelement (37) aufweist, das ein Fenster (38) umfasst, das eine Glasscheibe (39) trägt und angeordnet ist, um die Öffnung an der Seite im Inneren der Hülle zu schließen, wobei das Visualisierungsmodul somit mindestens eine Koppeleinheit (I) zwischen zwei Flächen (S) umfasst,
**dadurch gekennzeichnet, dass** es außerdem mindestens ein Dichtungssystem (40) umfasst, das an mindestens einer Koppeleinheit (I) angeordnet ist, wobei das Dichtungssystem mindestens eine hermetische Kammer (42) am Umfang der Koppeleinheit umfasst, wobei die Kammer mit einem neutralen Gas gefüllt ist, und dass das Dichtungssystem eine Druckmessvorrichtung (44) in der Kammer und eine Vorrichtung zur Gasinjektion (46) umfasst, die es ermöglicht, eine Menge neutralen Gases wertabhängig von einem von der Vorrichtung zur Messung des Drucks gelieferten Wert in die Kammer zu injizieren.

2. Sicherheitshülle nach dem vorhergehenden Anspruch, wobei die hermetische Kammer (42) durch ein Verbindungsstück (48) gebildet wird, das mit den beiden Flächen (S) zusammenwirkt, die eine Koppeleinheit (I) bilden.

3. Sicherheitshülle nach dem vorhergehenden Anspruch, wobei das Verbindungsstück (48) eine einzelne Verbindung (48a) mit einer solchen Form umfasst, dass sie mindestens zwei Auflagepunkte auf einer Fläche der Koppeleinheit und mindestens einen Auflagepunkt auf der anderen Fläche der Koppeleinheit aufweist.

4. Sicherheitshülle nach Anspruch 2, wobei das Verbindungsstück (48) zwei Dichtungen (48b) mit jeweils einer Schleifenform umfasst, die konzentrisch zwischen den beiden Flächen angeordnet sind, die die Koppeleinheit bilden.

5. Sicherheitshülle nach einem der Ansprüche 2 bis 4, wobei die Hülle mindestens einen Kanal (C) umfasst, der die dichte Installation der Druckmessvorrichtung (44) in der Kammer und der Vorrichtung zur Gasinjektion (46) ermöglicht, wobei der Kanal in die hermetische Kammer führt.

6. Sicherheitshülle nach einem der vorhergehenden Ansprüche, bei dem die mindestens eine Koppeleinheit des Visualisierungsmoduls zwei hermetische Kammern umfasst, die jeweils mit einer Druckmessvorrichtung in der Kammer und einer Vorrichtung zur Gasinjektion verbunden sind, die es ermöglichen, eine Menge neutralen Gases in die Kammer zu injizieren.

7. Sicherheitshülle nach dem vorhergehenden Anspruch, bei der jede Kammer zu einem unterschiedlichen Dichtungssystem gehört.

8. Sicherheitshülle nach Anspruch 6, bei der die beiden Kammern durch ein einziges Verbindungsstück gebildet werden.

9. Sicherheitshülle nach Anspruch 6, wobei das Verbindungsstück eine einzelne Dichtung (48c) mit einer solchen Form umfasst, dass sie mindestens zwei Auflagepunkte auf einer Fläche der Koppeleinheit und mindestens drei Auflagepunkte auf der anderen Fläche der Koppeleinheit aufweist, um zwei unterschiedliche Kammern zu bilden.

10. Sicherheitshülle nach dem vorhergehenden Anspruch, wobei das Visualisierungsmodul ein Gestell (31) umfasst, das in der Wand (10) angeordnet ist, wobei dieses Gestell die Öffnung (32) aufweist.

11. Sicherheitshülle nach dem vorhergehenden Anspruch, wobei mindestens ein Dichtungssystem an der Koppeleinheit zwischen dem Schutzfenster und/oder dem Schutzelement und dem Gestell angeordnet ist.

12. Sicherheitshülle nach dem vorhergehenden Anspruch, wobei jede Koppeleinheit ein Dichtungssystem aufweist.

13. Verfahren zur Verwaltung der Dichtigkeit einer Hülle nach einem der vorhergehenden Ansprüche, **dadurch gekennzeichnet, dass** es die folgenden Schritte umfasst:
- Messen des Drucks in der hermetischen Kammer (42) durch die Druckmessvorrichtung (44);
- Vergleichen des gemessenen Drucks mit einem Referenzdruckwert (p);
- Aktivieren der Vorrichtung zur Gasinj ektion (46), die es ermöglicht, eine Menge neutralen Gases in die Kammer einzuleiten, wenn der gemessene Wert kleiner als der Referenzwert ist, wobei die Vorrichtung zur Gasinjektion die Menge Gas einleitet, die es dem Druck in der hermetischen Kammer (42) ermöglicht, den Referenzdruckwert zu erreichen.

## Claims

1. Containment enclosure (1) comprising a wall (10) made of a concrete material that delimits a space (12) and at least one viewing module (30), said viewing module comprising at least one window (33) arranged in an opening (32) in the wall (10), said window having a frame (36) in which at least one optical unit (34) that provides protection from high-energy and/or neutron radiation is placed, said frame being fitted in the opening (32), the viewing module also having a protective element (37) that comprises a sash (38) bearing a pane (39) and is arranged so as to close the opening at the level of the inside face of the enclosure, said viewing module therefore comprising at least one interface (I) between two surfaces (S),
**characterized in that** it further comprises at least one sealing system (40) arranged at the level of at least one interface (I), said sealing system comprising at least one hermetic chamber (42) on the periphery of the interface, said chamber being filled with a neutral gas, and **in that** said sealing system comprises a pressure measurement device (44) for measuring pressure in the chamber and a gas injection device (46) allowing an amount of neutral gas to be injected into the chamber depending on a value provided by the pressure measurement device.

2. Containment enclosure according to the preceding claim, wherein the hermetic chamber (42) is formed by a joining piece (48) that cooperates with the two surfaces (S) forming the interface (I).

3. Containment enclosure according to the preceding claim, wherein said joining piece (48) comprises a single seal (48a) having a shape such that it exhibits at least two contact points with one surface of the interface and at least one contact point with the other surface of the interface.

4. Containment enclosure according to Claim 2, wherein said joining piece (48) comprises two seals (48b) that are each in the form of a loop and are arranged concentrically between the two surfaces forming the interface.

5. Containment enclosure according to Claims 2 to 4, wherein the enclosure comprises at least one channel (C) allowing for the sealed installation of the device for measuring the pressure (44) in the chamber and the gas injection device (46), said channel opening into the hermetic chamber.

6. Containment enclosure according to one of the preceding claims, wherein said at least one interface of the viewing module comprises two hermetic chambers that are each associated with a device for measuring the pressure in the chamber and a gas injection device allowing an amount of neutral gas to be injected into the chamber.

7. Containment enclosure according to the preceding claim, wherein each chamber belongs to a separate sealing system.

8. Containment enclosure according to Claim 6, wherein the two chambers are formed by a single joining piece.

9. Containment enclosure according to Claim 6, wherein said joining piece comprises a single seal (48c) having a shape such that it has at least two contact points with one surface of the interface and at least three contact points with the other interface, in order to form two separate chambers.

10. Containment enclosure according to the preceding claim, wherein the viewing module comprises a casing (31) arranged in the wall (10), said casing exhibiting the opening (32).

11. Containment enclosure according to the preceding claim, wherein at least sealing system is arranged at the interface between said window and/or said protective element and the casing.

12. Containment enclosure according to the preceding claim, wherein each interface has a sealing system.

13. Method for managing the sealing of an enclosure according to one of the preceding claims, **characterized in that** it comprises the following steps:
- measuring the pressure in the hermetic chamber (42) using the pressure measurement device (44);
- comparing the measured pressure with a reference pressure value (p);
- activating the gas injection device (46) allowing an amount of neutral gas to be injected into the chamber when the measured value is lower than the reference value, said gas injection device injecting the amount of gas that allows the pressure in the hermetic chamber (42) to reach the reference pressure value.
